# EUROPÄISCHE PATENTANMELDUNG

(11) **EP 2 913 130 A1**
(43) Veröffentlichungstag der Anmeldung: **02.09.2015**
(21) Anmeldenummer: 14157224.8
(22) Anmeldetag: 28.02.2014
(51) Int. Cl.: B23B 31/28

(54) **Spanneinrichtung für Werkzeugmaschinen**

(71) Anmelder: MTH GbR Markus und Thomas Hiestand, 88630 Pfullendorf (DE)
(72) Erfinder: Hiestand, Karl, 88630 Pfullendorf (DE)
(74) Vertreter: Engelhardt & Engelhardt

(57) **Zusammenfassung**

Bei einer Spanneinrichtung (1) für Werkzeugmaschinen (2) mit einen Kraftspannfutter (5), mit einem elektrischen Antriebsmotor (11), einem Bewegungswandler (31) sowie einem Kraftspeicher (61) ist der Bewegungswandier (31) als Untersetzungsgetriebe ausgebildet und aus zwei ineinander gelagerten Ringen (41, 42) gebildet. Der äußere Ring (41) ist konzentrisch zur Längsachse (A1) der Spanneinrichtung in einem Gehäuse (32) gelagert und mit dem Antriebsmotor (11) trieblich verbunden und weist eine exzentrisch zur Längsachse (A1) verlaufende Innenmantelfläche (43) auf. Der innere Ring (42) ist an der exzentrischen Innenmantelfläche (43) des äußeren Ringes (41) abgestützt und die Innenmantelfläche (44) des inneren Ringes (42) ist mit einer mit der Zugstange (7) zusammenwirkenden Verzahnung (46) versehen. Außerdem ist der innere Ring (42) mittels des Kraftspeichers (51) beiderseits axial abgestützt.

Durch diese Ausgestaltung wird erreicht, dass die Spanneinrichtung (1) wirtschaftlich herzustellen ist und nur einen geringen Bauaufwand erfordert, da ein Antriebsmotor (11) eingesetzt werden kann, der ein kleines Antriebsmoment aufweist und diesem keine Untersetzungsgetriebe nachzuschalten sind. Außerdem ist der Energieaufwand bei einer Verstellung der Spannbacken (6) des Kraftspannfutters gering und die Betriebsgeräusche wirken bei einfacher Handhabung nicht störend.

## Beschreibung

Die Erfindung bezieht sich auf eine Spanneinrichtung für Werkzeugmaschinen, die mit einem Kraftspannfutter zur Halterung eines Werkstückes versehen und dessen Spannbacken mittels der Spanneinrichtung über eine axial verstellbare Zugstange betätigbar sind, wobei die Spanneinrichtung einen umschaltbaren elektrischen Antriebsmotor zum Auslösen von Spannbewegungen, einen Bewegungswandler zur Umsetzung der Verstellbewegungen der Rotorwelle des Antriebsmotors in die zur Betätigung der Spannbacken erforderlichen axialen Verstellbewegungen der Zugstange sowie einen zweiteiligen Kraftspeicher zur Aufrechterhaltung der Spannkraft aufweist.

Eine derartige Spanneinrichtung ist zum Beispiel durch die EP 2384839 B1 bekannt. Der Bewegungswandler ist bei dieser Spanneinrichtung durch mehrere gleichmäßig über den Umfang verteilt angeordnete Planetenrollen gebildet, die zwischen einer mit dem Antriebsmotor trieblich verbundenen Hohlwelle und der Zugstange angeordnet sind. Mittels Rillen greifen die Planetenrollen in die Hohlwelle sowie in ein in die Zugstange eingearbeitetes Gewinde ein, so dass die Drehbewegungen der Hohlwelle über die Planetenrollen auf die Zugstange übertragen und in axiale Verstellbewegungen umgesetzt werden.

Derartige Planetenrollen ermöglichen zwar eine präzise Übertragung der Verstellbewegungen, die Herstellung der Planetenrollen und auch die Herstellung der mit diesen zusammenwirkenden Rillen in der Hohlwelle und des Gewindes in der Zugstange sind aber sehr aufwendig und damit teuer. Die Flanken der Planetenrollen sind nämlich, da diese in den Rillen geführt werden und sich geringfügig schrägstellen, um Verkantungen zu vermeiden, ballig auszubilden. Auch ist es erforderlich, da das Gewinde der Zugstange aus fertigungstechnischen Gründen und um die notwendige Festigkeit zu gewährleisten, eine große Steigung aufweisen muss, dem Bewegungswandler einen Antriebsmotor mit einem großen Leistungsvermögen zuzuordnen und zwischen diesem und dem Bewegungswandler ein ein- oder mehrstufiges Untersetzungsgetriebe einzubauen. Der Antriebsteil des Bewegungswandlers ist somit bei der bekannten Ausgestaltung äußerst aufwendig, groß bemessen und erfordert einen hohen finanziellen Aufwand, so dass der Einsatzbereich dieser bekannten Spanneinrichtung begrenzt ist.

Aufgabe der Erfindung ist es demnach, eine Spanneinrichtung der eingangs genannten Gattung in der Weise zu verbessern, dass diese wirtschaftlich herzustellen ist und nur einen geringen Bauaufwand erfordert. Vor allem aber soll erreicht werden, dass auch kurze axiale Verstellungen der Zugstange um Bruchteile eines Millimeters vorgenommen werden können und dass ein Antriebsmotor einsetzbar ist, der ein kleines Antriebsmoment aufweist und diesem somit kein Untersetzungsgetriebe nachzuschalten ist. Außerdem soll der Energieaufwand bei einer Verstellung der Spannbacken des Kraftspannfutters minimal sein, die Betriebsgeräusche sollen nicht störend wirken und bei einfacher Handhabung soll eine lange Lebensdauer, da nur wenige Bauteile benötigt und an Verstellbewegungen beteiligt sind, gewährleistet sein.

Gemäß der Erfindung wird dies bei einer Spanneinrichtung der vorgenannten Art dadurch erreicht, dass der Bewegungswandler als Untersetzungsgetriebe mit hoher Untersetzung ausgebildet ist und aus zwei ineinander gelagerten, vorzugsweise rohrförmig ausgebildeten Ringen besteht, wobei der äußere Ring konzentrisch zur Längsachse der Spanneinrichtung in einem diese aufnehmende Gehäuse gelagert und mit dem Antriebsmotor trieblich verbunden ist sowie eine exzentrisch zur Längsachse verlaufende Innenmantelfläche aufweist und der innere Ring über Wälzlager an der exzentrischen Innenmantelfläche des äußeren Ringes abgestützt und die Innenmantelfläche des inneren Ringes mit einer mit der Zugstange zusammenwirkenden Verzahnung versehen ist, und dass zumindest der innere Ring mittels des Kraftspeichers beiderseits axial abgestützt ist.

Zweckmäßig ist es hierbei, den Abstand zwischen der Achse der zentrischen Außenmantelfläche des äußeren Ringes und dessen exzentrischer Innenmantelfläche, von dem die Untersetzung des Bewegungswandlers mit abhängig ist, auf etwa ein bis acht Millimeter zu bemessen.

Angebracht ist es des Weiteren, dass die beiden Ringe etwa die gleiche axiale Breite und der innere Ring eine konstante Höhe aufweisen, und dass der innere Ring beiderseits über Wälzlager an axial begrenzt verschiebbaren und drehfest gehaltenen Druckstücken, die mit dem Kraftspeicher zusammenwirken, abgestützt ist.

Der Kraftspeicher sollte durch eine oder mehrere beiderseits der beiden Ringe angeordnete Tellerfedern oder Kunststoffscheiben z. B. aus elastomerem Werkstück als Federelemente gebildet sein, wobei die Druckstücke unmittelbar auf die Federelemente des Kraftspeichers einwirken sollten.

Nach einer vorteilhaften Ausgestaltung des Kraftspeichers ist vorgesehen, die Druckstücke und/oder die Federelemente des Kraftspeichers jeweils mit einem vorzugsweise etwa mittig angeordneten axial abstehenden Vorsprung zu versehen, über die die Druckstücke an den Federelementen abgestützt sind. Auf diese Weise ist es möglich, die Kennlinien der Federelemente derart zu beeinflussen, dass die Federkraft bei Anlage des Vorsprunges überproportional ansteigt.

Die zwischen den beiden Ringen und/oder zwischen dem äußeren Ring und dem Gehäuse angeordneten Wälzlager können durch ein oder mehrere Rillenkugellager oder Schrägkugellager gebildet sein. Auch können die in die Innenmantelfläche des inneren Ringes und/oder die Zugstange eingearbeiteten Verzahnungen als Trapezgewinde oder als Spitzgewinde ausgebildet werden.

Um zu vermeiden, dass bei Beaufschlagung einer Seite des Federspeichers die auf der gegenüberliegenden Seite angeordneten Bauteile sich verschieben können, ist es angezeigt, in den inneren Ring in Bohrungen eine oder mehrere in axialer Richtung auf die Druckstücke einwirkende Druckfedern einzusetzen, durch die die nicht beaufschlagten Bauteile unter Spannung gehalten werden.

Nach einer sehr vorteilhaften Weiterbildung ist vorgesehen, den inneren Ring aus zwei oder mehreren Ringsegmenten zusammenzusetzen, die drehfest und radial gegeneinander verschiebbar miteinander verbunden sind, und die Ringsegmente radial symmetrisch zueinander anzuordnen.

Zur Verbindung der Ringsegmente können hierbei in diese auf den einander zugekehrten Stirnflächen radial verlaufende Nuten eingearbeitet und in die Nuten Keilstücke eingesetzt sein.

Dem Bewegungswandler sollte ferner ein durch eine Servo-Einrichtung betätigbares Schaltglied zugeordnet werden, mittels dem der Bewegungswandler zur Betätigung des Kraftspannfutters mit dem Antriebsmotor verbindbar oder bei Arbeitsvorgängen blockierbar ist.

Außerdem ist es zweckmäßig, dem inneren Ring, dem Schaltglied und/oder der Zugstange jeweils eine Wegmesseinrichtung und/oder einen Endschalter zuzuordnen.

Wird eine Spanneinrichtung gemäß der Erfindung ausgebildet, so ist es möglich, für diese einen Antriebsmotor mit geringem Leistungsvermögen zu wählen, aber dennoch geringfügige und äußerst exakte Verstellbewegungen der Zugstange auszuführen. Dadurch, dass der Bewegungswandler als ein in besonderer Weise gestaltetes Untersetzungsgetriebe ausgebildet ist, das eine hohe Untersetzung der eingeleiteten Drehzahlen ermöglicht, wird nämlich bei einer Umdrehung des äußeren Ringes je nach dem Abstand zwischen der Längsachse der Spanneinrichtung und der exzentrisch zu dieser verlaufenden Achse der Innenmantelfläche des äußeren Ringes die Zugstange mitunter um Bruchteile eines Millimeters axial verschoben. Der Kraftaufwand zur Betätigung des Kraftspannfutters ist dabei äußerst gering, mit Hilfe der hohen Drehzahlen des Antriebsmotors kann aber dennoch eine Verstellung der Zugstange in die eine oder andere Richtung in einer angemessenen Zeiteinheit bewerkstelligt werden.

Die Konstruktion des Bewegungswandlers, der nur aus wenigen kostengünstig herzustellenden Bauteilen zusammengesetzt ist, ermöglicht es somit, einen Antriebsmotor zu verwenden, der klein baut und wirtschaftlich zu erwerben ist. Außerdem sind zusätzliche Untersetzungsgetriebe zwischen dem Antriebsmotor und dem Bewegungswandler nicht erforderlich. Die vorschlagsgemäß Ausgestaltung der Spanneinrichtung ist infolge dessen äußerst wirtschaftlich herzustellen und auch, da die Leistungsaufnahme des Antriebsmotors klein gehalten werden kann, wirtschaftlich zu betreiben.

In der Zeichnung ist ein Ausführungsbeispiel der gemäß der Erfindung ausgebildeten Spanneinrichtung für Werkzeugmaschinen dargestellt und nachfolgend im Einzelnen erläutert. Hierbei zeigt:
- Figur 1: die Spanneinrichtung in einem axialen Schnitt,
- Figur 2: einen Ausschnitt aus Figur 1, in einer vergrößerten Wiedergabe,

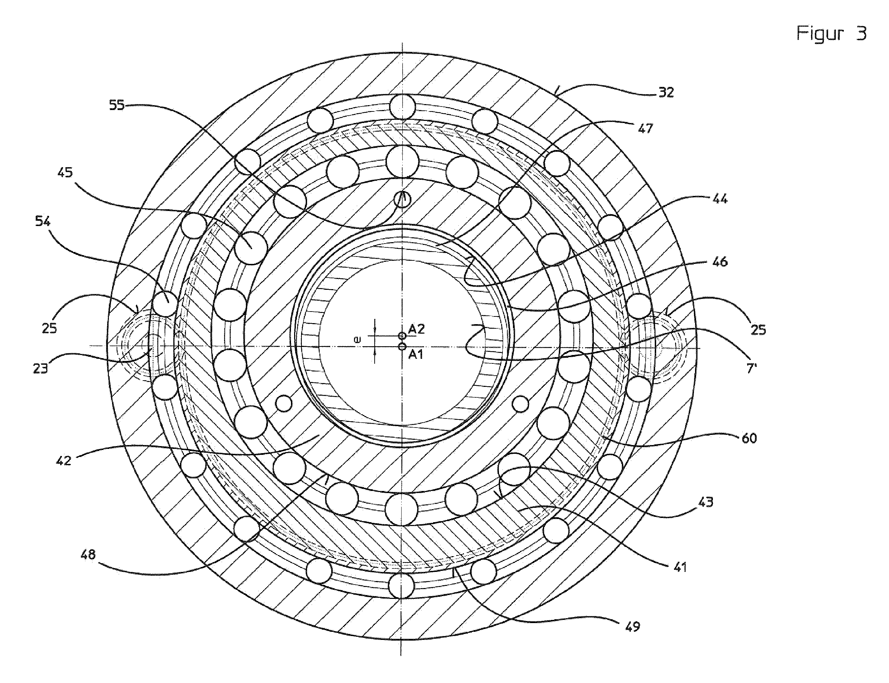

- Figur 3: einen Schnitt nach der Linie III-III der Figur 1,
- Figur 4: einen weiteren Ausschnitt aus Figur 1, in einer vergrößerten Darstellung,
- Figur 5: eine Ausführungsvariante des Bewegungswandler nach Figur 1, in einem Ausschnitt nach Figur 2 und
- Figuren 6 und 7: jeweils im Schnitt nach den Linien VI-VI bzw. VII-VII der Figuren 5.

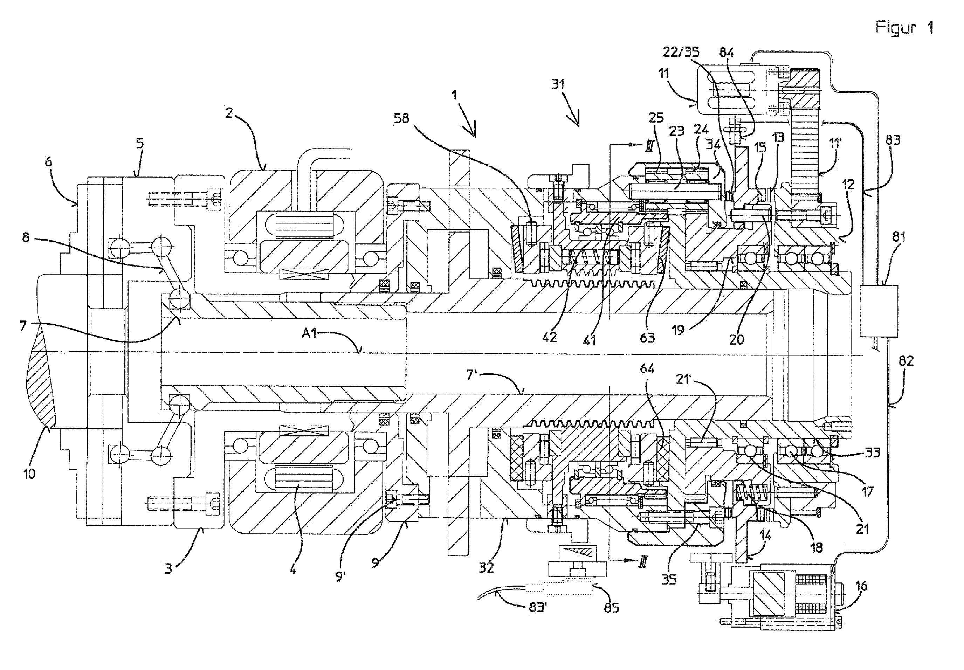

Die in Figur 1 gezeigte und mit 1 bezeichnete Spanneinrichtung dient zur Betätigung eines auf einer mit einem Elektromotor 4 ausgestalteten Werkzeugmaschine 2 angeordneten Kraftspannfutters 5, das an dem Spindelstock 3 befestigt und mittels dessen radial verstellbarer Spannbacken 6 ein zu bearbeitendes Werkstück 10 in dem Kraftspannfutter 5 einzuspannen ist. Die Spannbacken 6 des Kraftspannfutters 5 sind hierbei über Umlenkhebel 8 durch eine axial verstellbare zweiteilige Zugstange 7, 7' betätigbar, die mit einem umschaltbaren elektrischen Antriebsmotor 11, der schematisch und verkleinert dargestellt ist, über einen Bewegungswandler 31 in Triebverbindung steht. Mittels des Bewegungswandlers 31 werden die rotatorische Verstellbewegungen des Antriebsmotors 11 in axiale Zustellbewegungen der Zugstange 7, 7' umgewandelt.

Der Antriebsmotor 11 ist über einen Riementrieb 11' mit einer zweiteiligen Riemenscheibe 12 trieblich verbunden, die drehbar auf einem Endstück 33 eines mittels Schrauben 9' an einem Flansch 9 des Spindelstockes 3 befestigten Gehäuses 32, das den Bewegungswandler 31 aufnimmt, über Lager 17 abgestützt ist. Auf dem Endstück 33 ist des Weiteren ein Zahnrad 19 gelagert, das ein Schaltglied 14 trägt, das mittels Bolzen 20 drehfest mit dem Zahnrad 19 verbunden ist.

Mit Hilfe einer Servo-Einrichtung 16 ist das Schaltglied 14, das auf beiden Stirnflächen Verzahnung 15 und 22 aufweist, entgegen der Kraft von Federn 18 axial verschiebbar und somit wechselweise mit einer an der Riemenscheibe 12 angebrachten Verzahnung 13 und einer an einem Zwischenstück 34, das mittels Schrauben 35 an dem Gehäuse 32 befestigt ist, vorgesehenen Verzahnung 35 koppelbar. Mittels Lager 21, 21' ist das Zahnrad 19 ebenfalls auf dem Endstück 33 drehbar abgestützt.

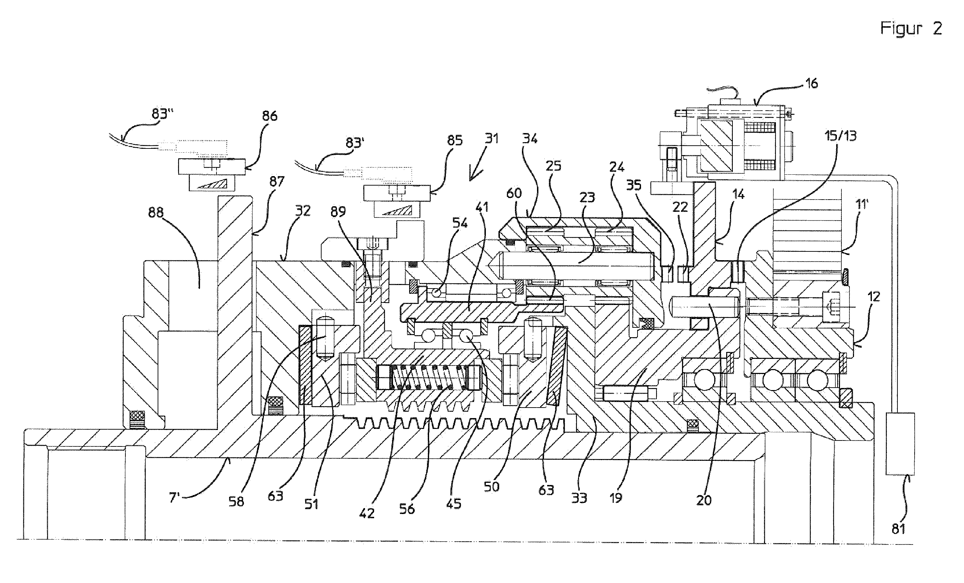

Bei eingerückten Verzahnungen 13 und 15, wie dies in Figur 2 gezeigt ist, wird Antriebsenergie von dem Antriebsmotor 11 auf den Bewegungswandler 31 übertragen. Um dies zu bewerkstelligen, ist das Zahnrad 19 trieblich an den Bewegungswandler 31 angeschlossen, in dem zwei diametral zueinander angeordnete Zahnräder 24, die jeweils auf einem Bolzen 23 gelagert sind, in das Zahnrad 19 eingreifen und fest mit zwei weiteren Zahnrädern 25 verbunden sind, die mit dem Eingangsglied des Bewegungswandlers 31, das dazu mit einer Verzahnung 60 versehen ist, in Triebverbindung stehen. Das Eingangsglied wird somit bei angekoppeltem und eingeschaltetem Antriebsmotor 11 in Rotation versetzt, und es werden axial gerichtete Verstellbewegungen an der Zugstange 7, 7' vorgenommen, um die Spannbacken 6 des Kraftspannfutters 5 nach innen oder außen zu verstellen.

Ist dagegen die Verzahnung 22 des Schaltgliedes 14 mit der an dem Zwischenglied 33 angebrachten Verzahnung 35 gemäß Figur 1 in Eingriff, ist der Bewegungswandler 31 trieblich mit dem Gehäuse 32 verbunden, so dass dieser blockiert ist und keine Verstellbewegung auf die Zugstange 7, 7' vorgenommen werden kann. Bei der Bear-beitung des Werkstückes 10 wird diese Betriebsstellung gewählt.

Der Bewegungswandler 31 ist bei der Spanneinrichtung 1 als Untersetzungsgetriebe mit hoher Untersetzung, einem sogenannten Planetenrollgetriebe, ausgebildet und besteht aus zwei ineinander gelagerten, rohrförmig gestalteten Ringen 41 und 42, wobei der innere Ring 42 in axialer Richtung abgestützt ist. Der äußere Ring 41 ist hierbei konzentrisch zur Längsachse A1 der Spanneinrichtung 1 in dem Gehäuse 32 mittels eines 54 an diesem abgestützt und weist eine kreisförmige Innenmantelfläche 43 auf, die exzentrisch zur Außenmantelfläche 49 verläuft. Die Achse A2 der Innenmantelfläche 43 des äußeren Ringes 41 ist um den Abstand e gegenüber der Längsachse A1 versetzt. Der innere Ring 42 ist an dessen Außenmantelfläche 48 und der Innenmantelfläche 43 anliegenden Wälzlagern 45 an dem äußeren Ring 41 abgestützt und auf der Innenmantelfläche 44 mit einer Verzahnung 46 versehen, die mit einer an der Zugstange 7' angebrachten, als Gewinde ausgebildeten Verzahnung 47 zusammenwirkt.

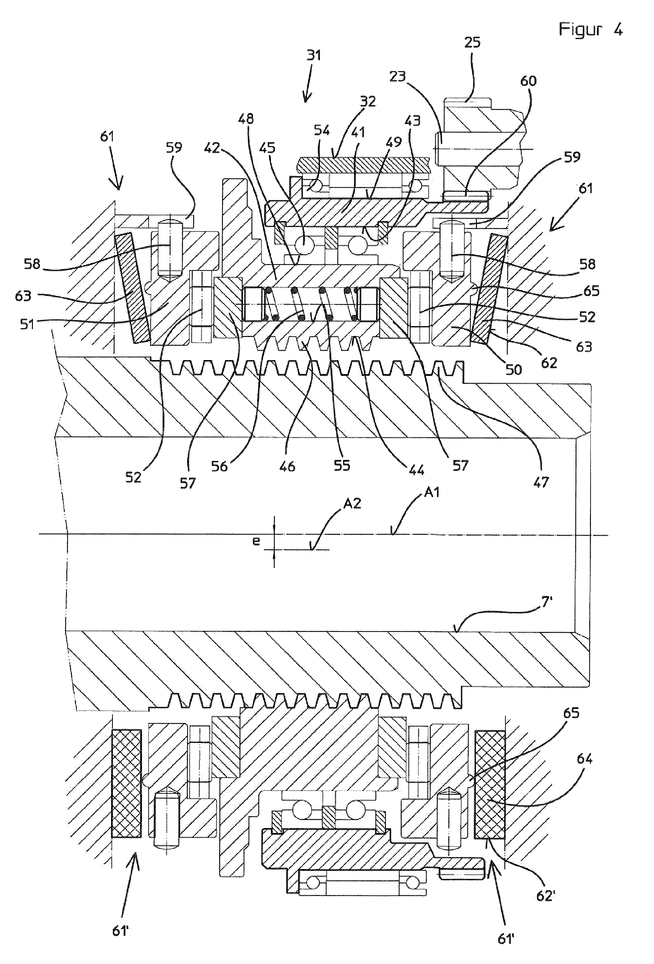

Des Weiteren ist der innere Ring 42 mittels Druckstücken 50 und 51 axial fixiert, auf die die beiderseits angeordneten Kraftspeicher 61 bzw. 61' einwirken. Die Kraftspeicher 61 und 61' sind hierbei durch Federelemente 62 bzw. 62' gebildet, die aus, wie dies in der oberen Hälfte der Figur 4 dargestellt ist, aus Tellerfedern 63 oder gemäß der Darstellung in der unteren Hälfte der Figur 4 aus Ringscheiben 64 aus einem elastomeren Kunststoff bestehen. Der innere Ring 42 wirkt über Zwischenstücke 57 und Wälzlager 52 auf die Druckstücke 50 bzw. 51 ein, die durch Bolzen 58, die in in dem Gehäuse 32 vorgesehene Nuten 59 eingreifen, gegen Verdrehung gesichert sind. Außerdem sind in den inneren Ring 42 mehrere axial gerichtete Bohrungen 55 eingearbeitet, in die Druckfedern 56 eingesetzt sind. Auf diese Weise wird verhindert, dass zum Beispiel bei einseitig gespanntem Kraftspeicher 50 die auf der gegenüberliegenden Seite vorgesehenen Bauteile, da diese nicht belastet werden, sich verschieben können.

Durch an den Druckstücken 50 und 51 angeformte Vorsprünge 65, die unter Umständen auch an den beiden Tellerfedern 63 bzw. den Ringscheiben 64 angebracht sein können und deren Abstand zur Längsachse A1 den Erfordernissen entsprechend gewählt werden kann, können die Feder-Kennlinien der Federelemente 62 bzw. 62' beinflusst werden. Bei Aktivierung eines der Kraftspeicher 61, indem die Spannbacken 5 an dem Werkstück 10 anliegen und weiterhin ein Drehmoment auf die Zugstange 7, 7' ausgeübt wird, steigt die Feder-Kennlinie des jeweils beaufschlagten Federelementes 62 entsprechend dessen Auslegung, da dieses zunächst auf der gesamten radialen Höhe verformt wird, an. Wird jedoch das Federelement 62 durch den zugeordneten Vorsprung 65 etwa in der Mitte beaufschlagt, wird, bedingt durch den verkürzten Hebelarm, die Federkennlinie verändert und eine hohe axiale Spannkraft hervorgerufen, die auf das Kraftspannfutter 5 einwirkt.

Der Bewegungswandler 31 ist als Untersetzungsgetriebe mit einer großen Reduktion der eingeleiteten Drehbewegung wirksam. Bei einer Verdrehung des äußeren Ringes 41 durch den zugeschalteten Antriebsmotor 11 wird, veranlasst durch die exzentrisch verlaufende Innenmantelfläche 43 des äußeren Ringes 41, der innere Ring 42 radial nach innen verschoben und geringfügig verdreht und stützt sich dabei über die an der Innenmantelfläche 44 vorgesehene Verzahnung im Bereich der größeren Wandstärke des äußeren Ringes 41 in der Verzahnung 47 der Zugstange 7', die in Form eines Gewindes ausgebildet ist, ab. Bei einer Umdrehung des äußeren Ringes 41 wird somit der innere Ring 42 in einer planetenartigen Bewegung einmal um die Exzentrizität e in radialer Richtung bewegt und verschiebt und verdreht den inneren Ring 42, so dass dieser auf die Gegenverzahnung 47 der Zugstange 7' einwirkt bzw. mit dieser zusammenwirken und sich in dieser abwälzt. Die Zugstange 7' wird dadurch in Abhängigkeit von der Steigung dieser Verzahnungen und den Abstand e zwischen den beiden Achsen A1 und A1 axial bewegt.

Da der innere Ring 42 durch die beiden Kraftspeicher 61 seitlich abgestützt ist, wird durch die radiale Verschiebung des inneren Ringes 42 die Zugstange 7' je nach Drehrichtung des äußeren Ringes 41 nach rechts oder links bewegt. Die an der Zugstange 7' vorgesehene Verzahnung 47 wirkt nämlich als Gegenlager für den Innenring 42, und dessen Verstellbewegungen werden durch die zusammenwirkenden Verzahnungen 46 und 47, wobei die an dem inneren Ring 42 angebrachte Verzahnung 46 durch Rillen oder ein Trapezgewinde gebildet sein kann, in eine Axialverstellung der Zugstange 7' umgewandelt, so dass diese in Abhängigkeit von dem durch den Abstand der beiden Achsen A1 und A2 sowie der Steigung der Verzahnungen 46 und 47 mehr oder weniger axial verstellt wird.

Um die jeweilige Stellung der verstellbaren Bauteile und somit den Betriebszustand des Kraftspannfutters 5 ermitteln zu können, sind dem Schaltglied 14 und/oder dem inneren Ring 42 des Bewegungswandlers 31 und/oder der Zugstange 7' Endschalter 84 oder Wegmess-Einrichtungen 85 bzw. 86 zugeordnet, die über Signalleitungen 83, 83' und 83" an ein Steuergerät 81 angeschlossen sind, das über eine weitere Signalleitung 82 mit der Servo-Einrichtung 16 verbunden ist. Zur Betätigung der Wegmess-Einrichtung 86 ist an der Zugstange 7' ein Ansatz 87 angeformt, der in eine in das Gehäuse 32 eingearbeitete Ausnehmung 88 durchgreift. Auch an dem inneren Ring 42 des Bewegungswandlers 31 ist zu dem gleichen Zweck ein Ansatz 88 angebracht.

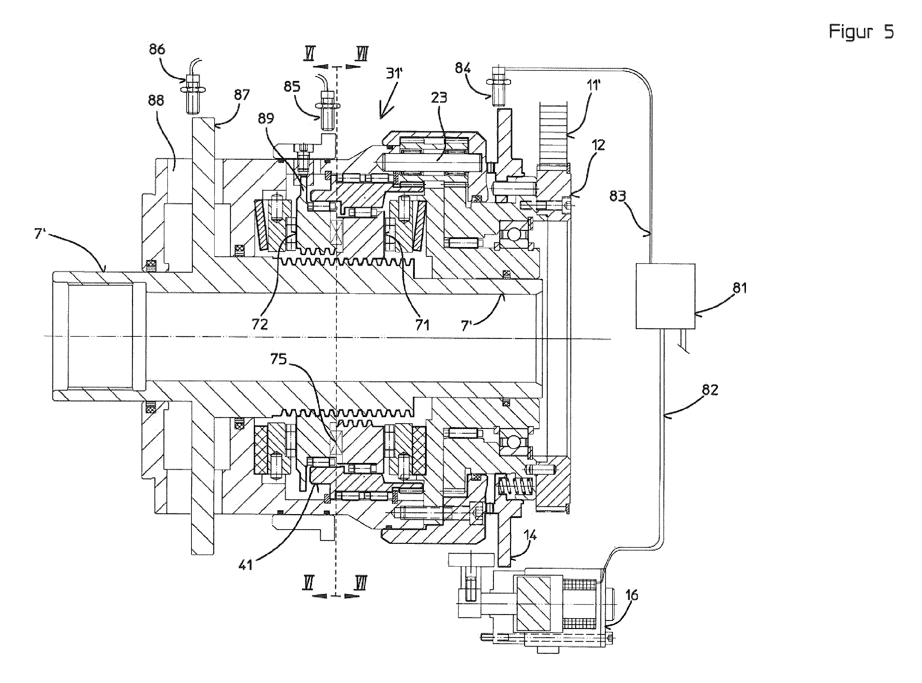

Bei dem in Figur 5 dargestellten Bewegungswandler 31' ist der Innenring aus zwei Ringsegmenten 71 und 72 zusammengesetzt, die drehfest und axial gegeneinander verschiebbar miteinander verbunden sind. Die beiden Ringsegmente 71 und 72 sind diametral zueinander in dem äußeren Ring 41 eingesetzt, so dass Unwuchten vermieden werden.

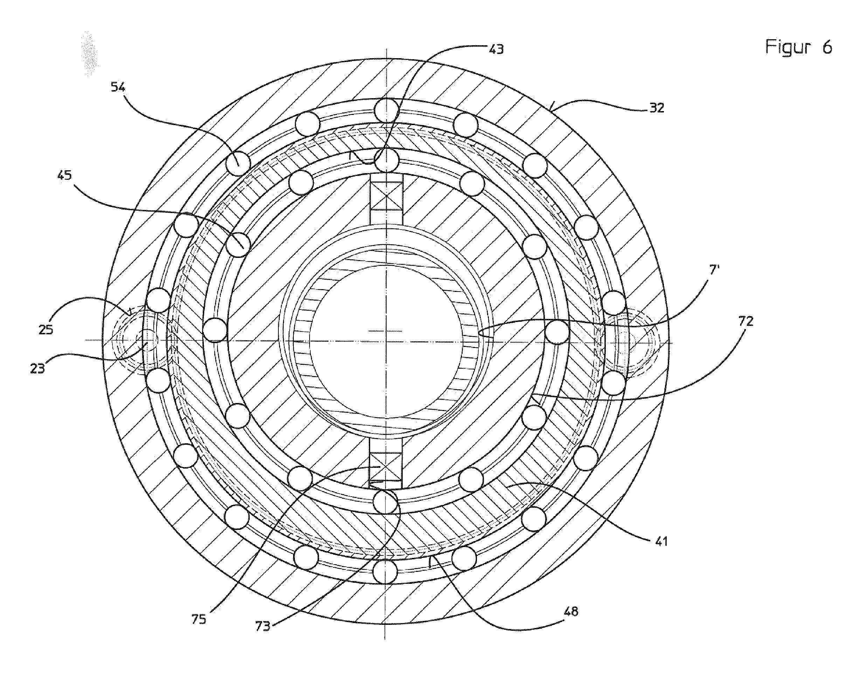

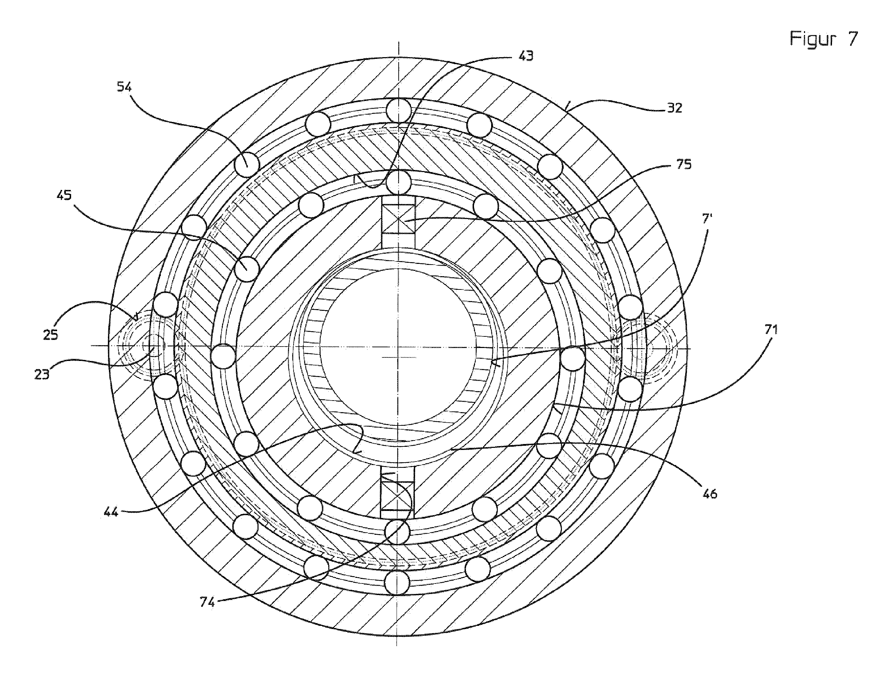

Um die radiale Verstellbarkeit zu ermöglichen, sind in die Ringsegmente 71 und 72, wie dies den Figuren 6 und 7 zu entnehmen ist, auf den einander zugekehrten Stirnflächen radial gerichtete Nuten 73 bzw. 74 eingearbeitet, in die Keilstücke 75 eingesetzt sind. Die Ringsegmente 71 und 72 können sich somit, ausgelöst durch den äußeren Ring 41 des Bewegungswandlers 31', radial gegeneinander verschieben, sind aber dennoch drehfest miteinander verbunden.

## Patentansprüche

1. Spanneinrichtung (1) für Werkzeugmaschinen (2), die mit einem Kraftspannfutter (5) zur Halterung eines Werkstückes (10) versehen und dessen Spannbacken (6) mittels der Spanneinrichtung (1) über eine axial verstellbare Zugstange (7, 7') betätigbar sind, wobei die Spanneinrichtung (1) einen umschaltbaren elektrischen Antriebsmotor (11) zum Auslösen von Spannbewegungen, einen Bewegungswandler (31) zur Umsetzung der Verstellbewegungen der Rotorwelle des Antriebsmotors (11) in die zur Betätigung der Spannbacken (6) erforderlichen axialen Verstellbewegungen der Zugstange (7, 7') sowie einen zweiteiligen Kraftspeicher (61) zur Aufrechterhaltung der Spannkraft aufweist,
**dadurch gekennzeichnet,**
**dass** der Bewegungswandler (31) als Untersetzungsgetriebe mit hoher Untersetzung ausgebildet ist und aus zwei ineinander gelagerten, vorzugsweise rohrförmig ausgebildeten Ringen (41, 42) besteht, wobei der äußere Ring (41) konzentrisch zur Längsachse (A1) der Spanneinrichtung (1) in einem dieses aufnehmende Gehäuse (32) gelagert und mit dem Antriebsmotor (11) trieblich verbunden ist sowie eine exzentrisch zur Längsachse (A1) verlaufende Innenmantelfläche (43) aufweist und der innere Ring (42) über Wälzlager (45) an der exzentrischen Innenmantelfläche (43) des äußeren Ringes (41) abgestützt und die Innenmantelfläche (44) des inneren Ringes (42) mit einer mit der Zugstange (7) zusammenwirkenden Verzahnung (46) versehen ist, und dass zumindest der innere Ring (42) mittels des Kraftspeichers (51, 51') beiderseits axial abgestützt ist.

2. Spanneinrichtung für Werkzeugmaschinen nach Anspruch 1,
**dadurch gekennzeichnet,**
**dass** der Abstand (e) zwischen den Achsen (A1, A2) der zentrischen Außenmantelfläche (46) des äußeren Ringes (42) und dessen exzentrischer Innenmantelfläche (43) etwa ein bis acht Millimeter beträgt.

3. Spanneinrichtung für Werkzeugmaschinen nach Anspruch 1 oder 2,
**dadurch gekennzeichnet,**
**dass** die beiden Ringe (41, 42) etwa die gleiche axiale Breite und der innere Ring (42) eine konstante Höhe aufweisen.

4. Spanneinrichtung für Werkzeugmaschinen nach einem oder mehreren der Ansprüche 1 bis 3,
**dadurch gekennzeichnet,**
**dass** der innere Ring (42) beiderseits über Wälzlager (52, 53) an axial begrenzt verschiebbaren und drehfest gehaltenen Druckstücken (50, 51), die mit dem Kraftspeicher (61, 61') zusammenwirken, abgestützt sind.

5. Spanneinrichtung für Werkzeugmaschinen nach einem oder mehreren der Ansprüche 1 bis 4,
**dadurch gekennzeichnet,**
**dass** der Kraftspeicher (61, 61') durch eine oder mehrere beiderseits der beiden Ringe (41, 42) angeordnete Tellerfedern (63) oder Kunststoffscheiben (64) z. B. aus einem elastomere Werkstück als Federelemente (62, 62') gebildet ist.

6. Spanneinrichtung für Werkzeugmaschinen nach einem oder mehreren der Ansprüche 4 oder 5,
**dadurch gekennzeichnet,**
**dass** die Druckstücke (50, 51) unmittelbar auf die Federelemente (62, 62') des Kraftspeichers (61, 61') einwirken.

7. Spanneinrichtung für Werkzeugmaschinen nach einem oder mehreren der Ansprüche 1 bis 6,
**dadurch gekennzeichnet,**
**dass** die Druckstücke (50, 51) und/oder die Federelemente (62, 62') des Kraftspeichers (61, 61') jeweils mit einem vorzugsweise etwa mittig angeordneten axial abstehenden Vorsprung (65) versehen sind, über die die Druckstücke (50, 51) an den Federelementen (62, 62') abgestützt sind.

8. Spanneinrichtung für Werkzeugmaschinen nach einem oder mehreren der Ansprüche 1 bis 7,
**dadurch gekennzeichnet,**
**dass** die zwischen den beiden Ringen (41, 42) und/oder zwischen dem äußeren Ring (41) und dem Gehäuse (32) angeordneten Wälzlager (45 bzw. 54) durch ein oder mehrere Rillenkugellager oder Schrägkugellager gebildet sind.

9. Spanneinrichtung für Werkzeugmaschinen nach einem oder mehreren der Ansprüche 1 bis 8,
**dadurch gekennzeichnet,**
**dass** die in die Innenmantelfläche (44) des inneren Ringes (43) eingearbeitete Verzahnung (45) als Trapezgewinde oder als Spitzgewinde und die in der Zugstange (7) vorgesehene Gegenverzahnung (46) in Form eines Gewindes ausgebildet sind.

10. Spanneinrichtung für Werkzeugmaschinen nach einem oder mehreren der Ansprüche 1 bis 9,
**dadurch gekennzeichnet,**
**dass** in den inneren Ring (42) in Bohrungen (55) eine oder mehrere in axialer Richtung auf die Druckstücke (50, 51) einwirkenden Druckfedern (56) eingesetzt sind.

11. Spanneinrichtung für Werkzeugmaschinen nach einem oder mehreren der Ansprüche 1 bis 10,
**dadurch gekenntzeichnet,**
dass der innere Ring (42') aus zwei oder mehreren Ringsegmenten (71, 72) zusammengesetzt ist, die drehfest und radial gegeneinander verschiebbar miteinander verbunden sind.

12. Spanneinrichtung für Werkzeugmaschinen nach einem oder mehreren der Ansprüche 1 bis 11,
**dadurch gekennzeichnet,**
**dass** die Ringsegmente (71, 72) radial symmetrisch zueinander angeordnet sind.

13. Spanneinrichtung für Werkzeugmaschinen nach einem oder mehreren der Ansprüche 11 oder 12,
**dadurch gekennzeichnet,**
**dass** zur Verbindung der Ringsegmente (71, 72) in diese auf den einander zugekehrten Stirnflächen radial verlaufende Nuten (73, 74) eingearbeitet und dass in die Nuten (73, 74) Keilstücke (75) eingesetzt sind.

14. Spanneinrichtung für Werkzeugmaschinen nach einem oder mehreren der Ansprüche 1 bis 13,
**dadurch gekennzeichnet,**
**dass** dem Bewegungswandler (31) ein durch eine Servo-Einrichtung (16) betätigbares Schaltglied (14) zugeordnet ist, mittels dem der Bewegungswandler (31) zur Betätigung des Kraftspannfutters (5) mit dem Antriebsmotor (11) verbindbar oder bei Arbeitsvorgängen blockierbar ist.

15. Spanneinrichtung für Werkzeugmaschinen nach einem oder mehreren der Ansprüche 1 bis 14,
**dadurch gekennzeichnet,**
**dass** dem inneren Ring (42), dem Schaltglied (16) und/oder der Zugstange (7) jeweils eine Wegmesseinrichtung (85, 86) und/oder ein Endschalter (84) zugeordnet sind.
